# EUROPEAN PATENT APPLICATION

(11) **EP 1 593 720 A1**
(43) Date of publication of application: **09.11.2005**
(21) Application number: 04705521.5
(22) Date of filing: 27.01.2004
(51) Int. Cl.: C09D 127/12, C09D 175/00

(54) **FLUORINE-CONTAINING AQUEOUS COATING COMPOSITION**

(30) Priority: 13.02.2003 JP 2003035583; 05.12.2003 JP 2003407700
(71) Applicant: DAIKIN INDUSTRIES, LTD., Osaka-shi, Osaka 530-8323 (JP)
(72) Inventor: IMOTO, Katsuhiko, Yodogawa-seisakusho, DAIKIN IND, Settsu-shi, Osaka 5668585 (JP); WADA, Susumu, Yodogawa-seisakusho, DAIKIN IND., Settsu-shi, Osaka 5668585 (JP); NAGATO, Masaru, Yodogawa-seisakusho, DAIKIN IND., Settsu-shi, Osaka 5668585 (JP); MOHRI, Haruhiko Yodogawa-seisakusho, DAIKIN IND., Settsu-shi, Osaka 5668585 (JP); HONDA, Kayoko, Yodogawa-seisakusho, DAIKIN IND., Settsu-shi, Osaka 5668585 (JP)
(74) Representative: Goddar, Heinz J.
(86) International application number: PCT/JP2004/000716
(87) International publication number: WO 2004/072197

(57) **Abstract**

There is provided a fluorine-containing aqueous coating composition comprising (A) an aqueous emulsion of fluorine-containing resin having functional group which is obtained by dispersing, in water, a fluoroolefin copolymer having functional group prepared by solution polymerization method and (B) a water-dispersible unblocked isocyanate compound. The aqueous fluorine-containing resin coating composition is capable of curing at room temperature and can provide a coating film being excellent in chemical resistance, water resistance, solvent resistance, stain-proof property, hardness, weather resistance and durability.

## Description

### TECHNICAL FIELD

The present invention relates to an aqueous coating composition which is curable at room temperature and provides a coating film being excellent in solvent resistance, weather resistance, hardness and gloss.

### BACKGROUND ART

There are known technologies using aqueous fluorine-containing resin compositions as resins for weather-resistant aqueous coating compositions. However such crosslinking type aqueous coating compositions are generally inferior in water resistance, solvent resistance, stain-proofing property, hardness of coating film, etc. as compared with crosslinking type solvent based coating compositions.

In order to improve those characteristics, studies on development of crosslinking type fluorine-containing resins for an aqueous coating composition are proceeded with, but are still insufficient. For example, copolymers of chlorotrifluoroethylene, tetrafluoroethylene or hexafluoropropylene with a monomer having crosslinkable functional group are disclosed in USP 5,548,019, JP7-324180A, etc. However those copolymers are fluoroolefin copolymers having functional group prepared by emulsion polymerization, and since a molecular weight of the resin is relatively high, compatibility of the resin with a curing agent is low. Also since a content of crosslinkable functional groups to be introduced is small due to inferior stability in water of the monomer having crosslinkable functional group, curability at room temperature is insufficient, a film forming property is not good and a crosslinking density of the coating film is low. Because of those characteristics, the coating film is inferior in solvent resistance, chemical resistance, durability, weather resistance and hardness.

Also there are known compositions comprising a vinylidene fluoride polymer and an acrylic polymer having crosslinkable functional group which are disclosed in JP7-268163A, JP2001-72725A, etc. However chemical bonding is not produced between the fluorine-containing resin and the acrylic resin because a crosslinkable functional group is not introduced to the fluorine-containing resin, and a crosslinking density of the obtained whole coating film is low. Also compatibility of the fluorine-containing resin with the acrylic resin after crosslinking reaction is inferior. Therefore water resistance, solvent resistance, stain-proofing property and hardness of the coating film are insufficient.

An object of the present invention is to provide an aqueous fluorine-containing resin coating composition which is curable at room temperature and provides a coating film being excellent in chemical resistance, water resistance, solvent resistance, stain-proofing property, hardness, weather resistance and durability.

### DISCLOSURE OF INVENTION

The present invention relates to a fluorine-containing aqueous coating composition comprising (A) an aqueous emulsion of fluorine-containing resin having functional group which is obtained by dispersing, in water, a fluoroolefin copolymer having functional group prepared by solution polymerization method and (B) a water-dispersible unblocked isocyanate compound.

It is preferable that the fluorine-containing resin (A) having functional group has water-soluble or water-dispersible functional group giving an acid value in addition to crosslinkable hydroxyl capable of reacting with the isocyanate compound (B). It is particularly preferable that the hydroxyl value of the fluorine-containing resin is from 10 to 300 mgKOH/g and the acid value thereof is from 5 to 200 mgKOH/g.

The above-mentioned water-soluble or water-dispersible functional group can be obtained, for example, by neutralizing an anionic functional group such as carboxyl or sulfonic acid group with alkali.

Preferred examples of the above-mentioned water-soluble or water-dispersible functional group are water-soluble or water-dispersible salts of anionic functional groups, for instance, ammonium salt, amine salt and alkali metal salt.

It is preferable that the fluorine-containing resin having functional group contains tetrafluoroethylene and/or hexafluoropropylene as structural units.

Preferred examples of the water-dispersible unblocked isocyanate compound (B) which is an another component of the coating composition are polyethylene oxide-modified unblocked isocyanate compounds.

In the present invention, the hydroxyl value and acid value are calculated by the following methods.

### (Method of calculating hydroxyl value)

Amounts of monomer components in the polymer are calculated from the amounts of produced polymer, polymer solution and residual monomer and the amounts of charged monomers. Next, the hydroxyl value in the polymer is calculated from the amounts of whole monomers and the amount of monomer having hydroxyl.

### (Method of calculating acid value)

Amounts of monomer components in the polymer are calculated from the amounts of produced polymer, polymer solution and residual monomer and the amounts of charged monomers. Next, the acid value in the polymer is calculated from the amounts of whole monomers and the amount of monomer having carboxyl.

### BEST MODE FOR CARRYING OUT THE INVENTION

The aqueous fluorine-containing resin coating composition of the present invention comprises (A) the aqueous emulsion of fluorine-containing resin having functional group which is obtained by dispersing, in water, a fluoroolefin copolymer having functional group prepared by solution polymerization method and (B) the water-dispersible unblocked isocyanate compound.

It is preferable that the fluoroolefin copolymer having functional group has a hydroxyl value and an acid value.

It is particularly preferable that the fluoroolefin copolymer having functional group has a hydroxyl value of not less than 10 mgKOH/g, further not less than 30 mgKOH/g, particularly not less than 50 mgKOH/g since a crosslinking density is high and stain-proofing property, weather resistance and hardness are excellent. Also it is advantageous that an upper limit of the hydroxyl value is 300 mgKOH/g, preferably 150 mgKOH/g since flexibility is imparted to the coating film. It is preferable that the fluoroolefin copolymer has an acid value of not less than 5 mgKOH/g, further not less than 10 mgKOH/g, particularly not less than 20 mgKOH/g since water dispersibility of the fluorine-containing resin is enhanced. Also it is advantageous that an upper limit of the acid value is 200 mgKOH/g, preferably 100 mgKOH/g since water resistance is imparted to the coating film.

Preferred emulsions (A) of fluorine-containing resin having functional group are:
(1) an aqueous emulsion of fluorine-containing resin having functional group obtained by dispersing, in water, a fluoroolefin copolymer (A1) having functional group prepared by solution polymerization method and
(2) an aqueous emulsion of fluorine-containing resin having functional group obtained by dispersing, in water, a fluorine-containing graft copolymer (A2) having functional group prepared by graft-polymerizing a vinyl monomer with a fluorine-containing polymer having polymerizable unsaturated double bond, in which the fluorine-containing polymer having polymerizable unsaturated double bond is a reaction product of a fluorine-containing polymer at least having carboxyl or hydroxyl with a compound having polymerizable unsaturated double bond and functional group capable of reacting with the carboxyl or hydroxyl.

Preferred example of the fluoroolefin copolymer in the aqueous emulsion of fluorine-containing resin having functional group of above (1) is the fluoroolefin copolymer (A1) having functional group.

As mentioned above, an aqueous emulsion (A1) of fluorine-containing resin having functional group is generally prepared directly into the form of emulsion by emulsion polymerization method. In the present invention, the fluoroolefin copolymer having functional group is prepared by solution polymerization method, and an organic solvent is used as a polymerization solvent. Therefore a functional group-containing monomer for introduction of the functional group can be supplied stably to a polymerization system and a desired amount of functional groups can be introduced to the fluoroolefin copolymer.

Technology of preparing a fluoroolefin copolymer having functional group for emulsion by solution polymerization method is known in the field of electrodeposition coating (for example, JP62-143915A, JP63-152677A, JP1-249866A, etc.), and those methods can also be used in the present invention.

Concretely a fluoroolefin, a functional group-containing monomer and as case demands, a monomer copolymerizable therewith are subjected to polymerization in an organic solvent.

Examples of the fluoroolefin are one or two or more of tetrafluoroethylene (TFE), trifluoroethylene (TrFE), chlorotrifluoroethylene (CTFE), hexafluoropropylene (HFP), vinyl fluoride (VF), vinylidene fluoride (VdF) and the like. Preferred examples of the fluoroolefin are perfluoroolefins such as TFE and HFP which can provide a fluoroolefin copolymer having a large fluorine content and gives advantageous effects of a fluorine-containing resin, for example, excellent chemical resistance, water resistance, solvent resistance, stain-proofing property, weather resistance and the like to a coating film.

As mentioned above, there are functional groups such as the crosslinkable hydroxyl capable of reacting with the isocyanate compound and the functional group imparting water solubility and water dispersibility to the fluorine-containing resin, and in the present invention, a monomer having both of those functional groups can be used preferably.

A represented example of the crosslinkable functional group capable of reacting with the isocyanate compound is hydroxyl, and in addition, amino group, silanol group, urethane group, amide group and carboxyl can be used together.

Examples of the hydroxyl-containing monomer as a crosslinkable functional group-containing monomer are, for instance, hydroxyalkyl allyl ether and hydroxyalkyl vinyl ether represented by the formula (I):

CH₂=CHR¹ (I)

wherein R¹ is -OR² or -CH₂OR², in which R² is an alkyl group having hydroxyl. Examples of R² are, for instance, linear or branched alkyl groups having 1 to 8 carbon atoms, in which 1 to 3 hydroxyl, preferably one hydroxyl is bonded. Examples thereof are, for instance, 2-hydroxyethyl vinyl ether, 3-hydroxypropyl vinyl ether, 2-hydroxypropyl vinyl ether, 2-hydroxy-2-methylpropyl vinyl ether, 4-hydroxybutyl vinyl ether, 4-hydroxy-2-methylbutyl vinyl ether, 5-hydroxypentyl vinyl ether, 6-hydroxyhexyl vinyl ether, 2-hydroxyethyl allyl ether, 4-hydroxybutyl allyl ether, glycerol monoallyl ether and the like. Among them, 4-hydroxybutyl vinyl ether and 2-hydroxyethyl vinyl ether are preferred from the viewpoint of excellent polymerization reactivity and curability of the functional group.

Examples of other hydroxyl-containing monomer are, for instance, 2-hydroxyethyl acrylate, 2-hydroxyethyl methacrylate and the like.

The water-soluble or water-dispersible functional group is not for acting as a crosslinkable group but for easily dispersing the functional group-containing fluoroolefin copolymer in water for forming a stable emulsion.

As mentioned above, examples of the water-soluble or water-dispersible functional group are, for instance, functional groups made water-soluble or water-dispersible by neutralizing, with alkali, anionic functional groups which do not impart water solubility or water dispersibility as they are.

Preferred examples of the water-soluble or water-dispersible functional group are water-soluble or water-dispersible salts of anionic functional groups, for example, ammonium salt, amine salt and alkali metal salt.

Examples of the anionic functional group which does not impart water solubility or water dispersibility as it is are carboxyl, sulfonic acid group, sulfinic acid group and the like. In consideration of easy synthesis, carboxyl or sulfonic acid group is preferred.

Examples of the carboxyl-containing monomer are unsaturated carboxylic acids such as unsaturated monocarboxylic acids, unsaturated dicarboxylic acids and monoesters and acid anhydrides thereof, and are represented by the formula (II): 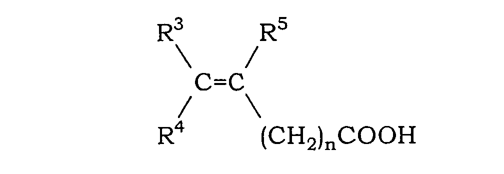 wherein R³, R⁴ and R⁵ are the same or different and each is hydrogen atom, alkyl group, carboxyl or ester group; n is from 0 to 20. It is preferable that both of R³ and R⁴ are hydrogen atoms and also n is not less than 3 and not more than 15. It is particularly preferable that all of R³, R⁴ and R⁵ are hydrogen atoms and n is not less than 6 and not more than 10.

Examples of the unsaturated carboxylic acid of the formula (I) are, for instance, acrylic acid, methacrylic acid, vinylacetic acid, crotonic acid, cinnamic acid, 3-allyloxypropionic acid, 3-(2-allyloxyethoxycarbonyl)propionic acid, itaconic acid, itaconic acid monoester, maleic acid, maleic acid monoester, maleic anhydride, fumaric acid, fumaric acid monoester, vinyl phthalate, vinyl pyromellitate, 5-hexenic acid, 5-heptenic acid, 6-heptenic acid, 7-octenic acid, 8-nonenoic acid, 9-decenoic acid, 10-undecylenic acid, 11-dodecylenic acid, 17-octadecylenic acid, oleic acid and the like. Among them, crotonic acid, itaconic acid, maleic acid, maleic acid monoester, fumaric acid, fumaric acid monoester, 3-allyloxypropionic acid and 10-undecylenic acid which are low in homo-polymerizability are preferred because a homopolymer is hardly produced. Particularly 10-undecylenic acid is preferred since it has good polymerization reactivity and is hardly hydrolyzable.

Examples of other carboxyl-containing monomer are carboxyl-containing vinyl ether monomers represented by the formula (III): 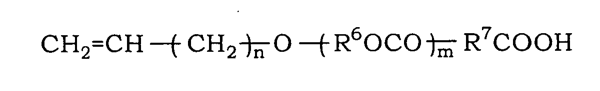 wherein R⁶ and R⁷ are the same or different and each is a saturated or unsaturated linear or cyclic alkyl group; n is 0 or 1; m is 0 or 1.

Examples of the carboxyl-containing vinyl ether monomers of the formula (III) are, for instance, one or two or more of 3-(2-allyloxyethoxycarbonyl)propionic acid, 3-(2-allyloxybutoxycarbonyl)propionic acid, 3-(2-vinyloxyethoxycarbonyl)propionic acid, 3-(2-vinyloxybutoxycarbonyl)propinic acid and the like. Among them, 3-(2-allyloxyethoxycarbonyl)propionic acid and the like are advantageous and preferable from the viewpoint of good stability and polymerization reactivity of the monomer.

Examples of the sulfonic acid group-containing monomer are, for instance, vinylsulfonic acid and the like.

The method of converting the functional group which does not give water solubility or water dispersibility as it is, to the water-soluble or water-dispersible functional group is explained infra.

As case demands, other copolymerizable monomer may be copolymerized with the functional group-containing fluoroolefin copolymer (A1).

Examples of the other copolymerizable monomer are vinyl esters of carboxylic acid, alkyl vinyl ethers, non-fluorine-containing olefins and the like.

Examples of the vinyl esters of carboxylic acid are, for instance, vinyl acetate, vinyl propionate, vinyl butyrate, vinyl isobutyrate, vinyl pivalate, vinyl caproate, vinyl versatate, vinyl laurate, vinyl stearate, vinyl cyclohexylcarboxylate, vinyl benzoate, vinyl para-t-butylbenzoate and the like which can impart characteristics such as enhancement of compatibility and gloss and increasing of glass transition temperature.

Examples of the alkyl vinyl ethers are, for instance, methyl vinyl ether, ethyl vinyl ether, butyl vinyl ether and the like which can impart characteristics such as enhancement of gloss and flexibility.

Examples of the non-fluorine-containing olefins are, for instance, ethylene, propylene, n-butene, isobutene and the like which can impart characteristics such as enhancement of flexibility.

In the present invention, those monomers are subjected to copolymerization by solution polymerization method, in which the polymerization conditions disclosed in the above-mentioned JP62-143915A, JP63-152677A, JP1-249866A, etc. are used.

The polymerization reaction is carried out preferably in an organic solvent in the presence of a polymerization initiator at a polymerization temperature of from 10° to 90°C for 1 to 20 hours.

Examples of the organic solvent are esters such as methyl acetate, ethyl acetate, propyl acetate and butyl acetate; ketones such as acetone, methyl ethyl ketone and cyclohexanone; hydrocarbons such as hexane, cyclohexane and octane; aromatic hydrocarbons such as benzene, toluene, xylene and naphthalene; alcohols such as methanol, ethanol, tert-butanol, iso-propanol and ethylene glycol monoalkyl ether; cyclic ethers such as tetrahydrofuran, tetrahydropyran and dioxane; dimethyl sulfoxide, and mixtures thereof. Among them, acetone, ethyl acetate and iso-propanol are advantageous from the viewpoint of solubility of the fluorine-containing resin, and further acetone and ethyl acetate are most preferable because they are easily distilled off when preparing an aqueous emulsion.

Usable as the polymerization initiator are, for instance, diacyl peroxides such as octanoyl peroxide, acetyl peroxide and benzoyl peroxide; dialkoxycarbonyl peroxides such as isopropoxycarbonyl peroxide and tert-butoxycarbonyl peroxide; ketone peroxides such as methyl ethyl ketone peroxide and cyclohexanone peroxide; hydroperoxides such as hydrogen peroxide, tert-butyl hydroperoxide and cumene hydroperoxide; dialkyl peroxides such as di-tert-butyl peroxide and dicumyl peroxide; alkyl peroxy esters such as tert-butyl peroxyacetate and tert-butyl peroxypivalate; persulfates such as ammonium persulfate and potassium persulfate (further as case demands, a reducing agent such as sodium hydrogensulfite, sodium pyrosulfite, cobalt naphthenate and dimethylaniline can be used together); redox polymerization initiators comprising an oxidizing agent (for example, ammonium peroxide, potassium peroxide or the like), a reducing agent (for example, sodium sulfite or the like) and a transition metal salt (for example, ferrous sulfate or the like); azo compounds such as 2,2'-azobisisobutyronitrile, 2,2'-azobis(2,4-dimethylvaleronitrile), 2,2'-azobis(2-methylvaleronitrile), 2,2'-azobis(2-cyclopropylpropionitrile), dimethyl 2,2'-azobis(isobutyrate), 2,2'-azobis[2-(hydroxymethyl)propionitrile] and 4,4'-azobis(4-cyanopentenic acid) and the like.

Further as case demands, alcohol such as methanol, ethanol or propanol may be used as a molecular weight regulating agent.

A number average molecular weight of the so-obtained fluoroolefin copolymer (A1) having functional group is not more than 100,000, preferably not more than 50,000 from the viewpoint of polymerizability in solution polymerization, and is not less than 4,000, particularly not less than 8,000 from the viewpoint of excellent weather resistance and durability.

Mentioned below are preferred examples of the fluoroolefin copolymer (A1) having functional group.
TFE/ethyl vinyl ether/hydroxybutyl vinyl ether/3-(2-allyloxyethoxycarbonyl)propionic acid copolymer, TFE/vinyl versatate/hydroxybutyl vinyl ether/3-(2-allyloxyethoxycarbonyl)propionic acid copolymer, TFE/vinyl acetate/hydroxybutyl vinyl ether/3-(2-allyloxyethoxycarbonyl)propionic acid copolymer, TFE/vinyl acetate/hydroxyethyl vinyl ether/3-(2-allyloxyethoxycarbonyl)propionic acid copolymer and TFE/vinyl versatate/hydroxyethyl vinyl ether/3-(2-allyloxyethoxycarbonyl)propionic acid copolymer

The fluorine-containing graft copolymer (A2) having functional group is also preferred as the fluorine-containing resin for the aqueous emulsion of fluorine-containing resin having functional group of above (2).

The fluorine-containing graft copolymer (A2) having functional group is prepared by graft-polymerizing a vinyl monomer (b 1) with a fluorine-containing polymer (a3) having polymerizable unsaturated double bond which is a reaction product of a fluorine-containing polymer (a1) having carboxyl or hydroxyl with a compound (a2) having polymerizable unsaturated double bond and functional group capable of reacting with the carboxyl or hydroxyl.

To the fluorine-containing polymer (a3) is introduced the polymerizable unsaturated double bond by reacting the carboxyl or hydroxyl of the fluorine-containing polymer (a1) with the functional group of the compound (a2) having polymerizable unsaturated double bond.

Preferred examples of the fluorine-containing polymer (a1) are copolymers comprising a fluoroolefin unit, a carboxyl-containing monomer unit and/or a hydroxyl-containing monomer unit.

Preferred examples of the fluoroolefin are, for instance, those exemplified supra in the preparation of the fluorine-containing graft copolymer (A1) having functional group.

Examples of the carboxyl-containing monomer are unsaturated carboxylic acids represented by the formula (II) such as unsaturated monocarboxylic acids, unsaturated dicarboxylic acids and monoesters and acid anhydrides thereof; carboxyl-containing vinyl ether monomers represented by the formula (III), carboxyl-containing allyl ether monomers and the like. Examples thereof are those exemplified supra.

Among the carboxyl-containing monomers, more preferred are monomers represented by the formula (II) and carboxyl-containing allyl ether monomers.

It is preferable that the molar ratio of the fluoroolefin unit to the carboxyl-containing monomer unit is 100/50 to 100/0.2, further 100/20 to 100/0.5, particularly 100/6 to 100/0.9. If the proportion of the carboxyl-containing monomer unit is decreased, there is a tendency that lowering of performance arises due to lowering of a graft ratio. On the other hand, if the proportion of the carboxyl-containing monomer unit is increased, there is a tendency that lowering of performance arises due to too high hydrophilic property of the polymer trunk chain (not a graft chain) of fluoroolefin.

The fluorine-containing polymer (a1) may consist of the hydroxyl-containing monomer unit.

Examples of the hydroxyl-containing monomer are, for instance, hydroxyalkyl allyl ethers and hydroxyalkyl vinyl ethers represented by the mentioned formula (III). Examples thereof are monomers exemplified supra.

Further by introducing both of hydroxyl and carboxyl to the fluorine-containing polymer (a1), there are obtained effects that crosslinking by an isocyanate curing agent can be carried out and characteristics of the coating film are enhanced. The hydroxyl can also be introduced by using a hydroxyl-containing monomer as the graft monomer mentioned infra.

In addition, as case demands, other copolymerizable monomer unit may be contained in the fluorine-containing polymer (a1). Preferred examples of the other copolymerizable monomer are those exemplified supra in the fluoroolefin copolymer (A1) having functional group such as vinyl esters of carboxylic acid, alkyl vinyl ethers and non-fluorine-containing olefins.

It is preferable that a number average molecular weight of the fluorine-containing polymer (a1) is not more than 100,000, more preferably not more than 50,000 from the viewpoint of polymerizability in solution polymerization, and is preferably not less than 4,000, particularly not less than 8,000 because weather resistance and durability are excellent.

Nonlimiting examples of preferred fluorine-containing polymer (a1) are as follows.

### (1) Fluorine-containing polymer containing carboxyl alone

Tetrafluoroethylene (TFE)/vinyl propionate/vinyl versatate/crotonic acid copolymer, hexafluoropropylene (HFP)/vinyl acetate/vinyl versatate/crotonic acid copolymer, TFE/vinyl acetate/undecylenic acid copolymer, HFP/vinyl acetate/undecylenic acid copolymer, TFE/vinyl versatate/undecylenic acid copolymer, HFP/vinyl versatate/undecylenic acid copolymer, TFE/vinyl acetate/vinylacetic acid copolymer, HFP/vinyl acetate/vinylacetic acid copolymer, TFE/vinyl versatate/vinylacetic acid copolymer, HFP/vinyl versatate/vinylacetic acid copolymer, TFE/vinyl acetate/maleic acid monoethyl copolymer, HFP/vinyl acetate/maleic acid monoethyl copolymer, TFE/vinyl versatate/maleic acid monoethyl copolymer, HFP/vinyl versatate/maleic acid monoethyl copolymer and the like.

### (2) Fluorine-containing polymer containing hydroxyl (alone)

TFE/vinyl versatate/hydroxybutyl vinyl ether (HBVE) polymer, TFE/vinyl acetate/HBVE copolymer, HFP/vinyl acetate/HBVE copolymer, HFP/vinyl versatate/HBVE copolymer and the like.

### (3) Fluorine-containing polymer containing carboxyl and hydroxyl

TFE/vinyl versatate/hydroxybutyl vinyl ether (HBVE)/crotonic acid copolymer, TFE/vinyl acetate/HBVE/undecylenic acid copolymer, HFP/vinyl acetate/HBVE/undecylenic acid copolymer, TFE/vinyl versatate/HBVE/undecylenic acid copolymer, HFP/vinyl versatate/HBVE/undecylenic acid copolymer, TFE/vinyl acetate/HBVE/vinylacetic acid copolymer, HFP/vinyl acetate/HBVE/vinylacetic acid copolymer, TFE/vinyl versatate/HBVE/vinylacetic acid copolymer, HFP/vinyl versatate/HBVE/vinylacetic acid copolymer, TFE/vinyl acetate/HBVE/maleic acid monoethyl copolymer, HFP/vinyl acetate/HBVE/maleic acid monoethyl copolymer, TFE/vinyl versatate/HBVE/maleic acid monoethyl copolymer, HFP/vinyl versatate/HBVE/maleic acid monoethyl copolymer and the like.

It is preferable that the fluorine-containing polymer (a1) is prepared by solution polymerization method in the same manner as in the fluoroolefin copolymer (A1) having functional group. Emulsion polymerization of the polymer is not satisfactory because polymerizability of the fluoroolefin is low, polymerizability of monomer containing hydroxyl and carboxyl is low, distribution of polymer composition is wide and much amount of emulsifying agent is required.

The solution polymerization method, polymerization conditions, organic solvent, polymerization initiator and molecular weight regulating agent which are exemplified supra in the fluoroolefin copolymer (A1) having functional group are used preferably.

The fluorine-containing polymer (a3) having polymerizable unsaturated double bond is obtained by reacting the so-obtained fluorine-containing polymer (a1) containing carboxyl or hydroxyl with the compound (a2) having polymerizable unsaturated double bond and functional group capable of reacting with the carboxyl or hydroxyl.

Examples of the functional group capable of reacting with the carboxyl or hydroxyl are isocyanate group, epoxy group, amino group, carbodiimide group and the like. Among them, isocyanate group and epoxy group are preferred because the reaction with the carboxyl or hydroxyl arises rapidly.

Examples of the compound (a2) are, for instance, isocyanate group-containing compounds such as 2-isocyanatoethyl methacrylate, epoxy group-containing compounds such as glycidyl methacrylate, glycidyl acrylate and allyl glycidylether and the like.

Among them, 2-isocyanatoethyl methacrylate, glycidyl methacrylate and glycidyl acrylate are preferred.

The isocyanate group reacts with hydroxyl, but reacts with carboxyl in preference to hydroxyl.

The reaction of the compound (a2) with the fluorine-containing polymer (a1) can be carried out by mixing the both in an organic solvent. Preferred reaction conditions which can be employed are a reaction temperature of from 20° to 150°C and a reaction time of from 1 to 15 hours.

The organic solvent may be one which dissolves the fluorine-containing polymer (a1) and the compound (a2). For example, the organic solvents used in the polymerization of fluorine-containing polymer (a1) can be used.

The compound (a2) is so reacted that the amount of functional group of the compound (a2) is from 2 to 0.01 mole, preferably from 1 to 0.1 mole, particularly from 1 to 0.9 mole based on 1 mole of fluorine-containing polymer (a1).

Next, the vinyl monomer (b1) is graft-copolymerized with the obtained fluorine-containing polymer (a3) having polymerizable unsaturated double bond to obtain the fluorine-containing graft copolymer (A2).

The vinyl monomer (b1) to be grafted may be a vinyl monomer which is graft-copolymerizable with the polymerizable unsaturated double bond in the fluorine-containing polymer (a3).

Particularly when various characteristics are imparted, a vinyl monomer having various functional groups may be used.

For example, in order to give the mentioned specific acid value (from 5 to 200 mgKOH/g) and impart water solubility and water dispersibility to the fluorine-containing graft copolymer (a3), a vinyl monomer having carboxyl and/or sulfonic acid group may be used.

Also in order to give the mentioned specific hydroxyl value (from 10 to 300 mgKOH/g) to the fluorine-containing graft copolymer (a3) and cause crosslinking reaction with the isocyanate compound, a vinyl monomer having crosslinkable hydroxyl may be used. Examples of the functional group other than hydroxyl which causes crosslinking reaction with the isocyanate compound are carboxyl, carbonyl group and amino group, and vinyl monomers having one or two or more of such functional groups may be used together.

In order to impart other characteristics such as adhesion and pigment dispersibility, a vinyl monomer having carboxyl, amino group, amide group or epoxy group may be used.

Examples of the vinyl monomer (b1) are, for instance, one or two or more of methacrylic acid esters such as methyl methacrylate, ethyl methacrylate, n-butyl methacrylate, 2-ethylhexyl methacrylate and cyclohexyl methacrylate; acrylic acid esters such as methyl acrylate, n-butyl acrylate and 2-ethylhexyl acrylate; unsaturated carboxylic acids such as acrylic acid, methacrylic acid, maleic acid and crotonic acid; amide compounds such as acrylamide, methacrylamide, N-methylacrylamide, N-methylolacrylamide, N-butoxymethylacrylamide, N-methylolmethacrylamide, N-methylmethacrylamide and N-butoxymethylmethacrylamide; monomers having hydroxyl such as hydroxyethyl acrylate, hydroxyethyl methacrylate, hydroxypropyl acrylate and hydroxypropyl methacrylate; monomers having epoxy group such as glycidyl acrylate and glycidyl methacrylate; monomers having siloxane group such as γ-trimethoxysilane methacrylate and γ-triethoxysilane methacrylate; monomers having aldehyde group such as acrolein; and the like.

Among them, (meth)acrylic monomers are preferred since polymerizability is high and there are many commercially available monomers.

The graft copolymerization can be carried out in an organic solvent in the presence of a polymerization initiator. The organic solvent used in the polymerization of fluorine-containing polymer (a1) can be used, and also the polymerization initiator used in the polymerization of fluorine-containing polymer (a1) can be used.

With respect to conditions for the graft copolymerization, for example, radical polymerization in a solution, ion polymerization in a solution or the like can be employed.

The graft copolymerization may be carried out after separation of the fluorine-containing polymer (a3) or subsequently to the reaction of the fluorine-containing polymer (a1) with the compound (a2).

It is preferable that the amount of vinyl monomer (b1) is not less than 1 part by weight, further not less than 5 parts by weight, particularly not less than 10 parts by weight based on 100 parts by weight of the fluorine-containing polymer (a3) since modifying effect by the grafting is exhibited. An upper limit of the amount of vinyl monomer (b1) is 300 parts by weight, further 100 parts by weight, particularly 50 parts by weight. If the amount is too large, there is a tendency that performance derived from the fluorine-containing resin is lowered.

It is preferable that a hydroxyl value of the fluorine-containing graft copolymer (A2) having functional group is not less than 10 mgKOH/g, further not less than 30 mgKOH/g, particularly not less than 50 mgKOH/g because a crosslinking density is high and stain-proofing property, weather resistance and hardness are excellent. It is advantageous that an upper limit of the hydroxyl value is 300 mgKOH/g, preferably 150 mgKOH/g since flexibility is imparted to the coating film.

When the graft chain has carboxyl, an acid value of the graft chain is not less than 20 mgKOH/g, preferably not less than 50 mgKOH/g, further preferably not less than 100 mgKOH/g and not more than 800 mgKOH/g, preferably not more than 500 mgKOH/g, further preferably not more than 300 mgKOH/g.

Also an acid value of the whole fluorine-containing graft copolymer (A2) after the graft polymerization is not less than 5 mgKOH/g, preferably not less than 10 mgKOH/g, further preferably not less than 20 mgKOH/g and not more than 200 mgKOH/g, preferably not more than 150 mgKOH/g, further preferably not more than 100 mgKOH/g.

A molecular weight of the graft chain may be selected optionally depending on an intended application, easiness in handling and the like. A number average molecular weight thereof is not less than 1,000, further preferably not less than 2,000, particularly preferably not less than 3,000 and not more than 100,000, further preferably not more than 50,000, particularly preferably not more than 20,000.

A graft ratio is as high as not less than 10 % by weight, further not less than 30 % by weight, particularly not less than 50 % by weight.

The emulsion (A) of fluorine-containing resin having functional group can be prepared by pouring the polymerization reaction solution of the fluorine-containing polymer having functional group into water with stirring or by adding water to the polymerization reaction solution with stirring.

When an anionic functional group which is not water soluble or water dispersible as it is, for example, carboxyl or sulfonic acid group is present as a functional group, neutralizing treatment is carried out before mixing to water, when mixing to water or after mixing to water, thereby converting the functional group to water soluble or water dispersible functional group.

Examples of the neutralizing agent used for the neutralization are ammonia; organic amines such as diethylamine, ethyl ethanol amine, diethanol amine, monoethanol amine, monopropanol amine, isopropanol amine, ethylaminoethyl amine, hydroxyethyl amine and diethylenetriamine; hydroxides of alkali metal such as sodium hydroxide and potassium hydroxide; and the like. Among them, ammonia, triethylamine and diethanol amine are preferred because they are easily obtained on the market and the emulsion is stable. Particularly ammonia and triethylamine are advantageous from the viewpoint of easy handling.

It is preferable to use the neutralizing agent in the form of aqueous solution. The neutralizing agent may be used in the form of gas or solid.

As a result of the neutralization, the anionic functional group becomes in the form of ammonium salt, amine salt or alkali metal salt.

In the neutralization, the anionic functional group corresponding to the acid value of not less than 5 mgKOH/g, preferably not less than 10 mgKOH/g and not more than 70 mgKOH/g, preferably not more than 50 mgKOH/g of the fluorine-containing resin having functional group may be neutralized with a neutralizing agent.

The solid content of emulsion (A) of fluorine-containing resin having functional group is usually not less than 20 % by weight, preferably not less than 30 % by weight since coating efficiency is good, and is not more than 70 % by weight, preferably not more than 60 % by weight from the viewpoint of stability of the emulsion.

In order to enhance stability of the emulsion (A) of fluorine-containing resin having functional group, further a surfactant may be used. For example, an anionic emulsifying agent, a nonionic emulsifying agent or a combination thereof can be used as a surfactant. As case demands, an ampholytic emulsifying agent or a cationic surfactant can be used.

Usable as an anionic surfactant are, for example, sodium salt of fatty alcohol sulfate, sodium alkylbenzenesulfonate, sodium salt of dialkylsulfosuccinate, sodium salt of alkyl diphenyl ether sulfonate and the like. Among them, preferred examples are sodium alkylbenzene sulfonate, sodium lauryl sulfate, polyoxyethylene alkyl (or alkylphenyl) ether sulfonate and the like. As a nonionic emulsifying agent, for example, polyoxyethylene alkyl ether, polyoxyethylene alkyl aryl ether or the like can be used. Preferred examples are polyoxyethylene nonyl phenyl ether, polyoxyethylene octyl phenyl ether and the like. As an ampholytic emulsifying agent, lauryl betaine and the like are suitable. Usable as a cationic surfactant are, for example, alkyl pyridinium chloride, alkyl ammonium chloride and the like. Also an emulsifying agent copolymerizable with the monomers, for example, sodium styrene sulfonate, sodium alkyl aryl sulfonate or the like can be used.

A particle size of the fluoroolefin copolymer particles having functional group in the emulsion (A) of fluorine-containing resin having functional group is usually not less than 50 µm, preferably not less than 100 µm and not more than 300 µm, preferably not more than 200 µm.

By distilling off the organic solvent by distillation or distillation under reduced pressure, a fluorine-containing resin emulsion not containing the organic solvent or containing a small amount of organic solvent may be produced. For example, when preparing the emulsion, the organic solvent used for the solution polymerization can be distilled off by heating. It is desirable that the heating is carried out at as low a temperature as possible from the viewpoint of energy cost saving and also in consideration of the case where a thermally unstable functional group or copolymerization unit is contained. A preferred heating temperature is not more than 100°C, further preferably not more than 80°C and not less than 40°C, further preferably not less than 60°C.

One of the features of the present invention is to use the water-dispersible unblocked isocyanate compound (B) as a curing agent. As a curing agent for fluorine-containing resin coating compositions, there are usually used blocked isocyanate compounds, melamine resins and the like in addition to unblocked isocyanate compounds. However there is a problem that blocked isocyanate compounds and melamine resins cannot be cured at room temperature.

From this point of view, the unblocked isocyanate compound (B) is excellent in curability at room temperature and advantageous from the viewpoint of crosslinking reactivity when used in combination with the emulsion (A) of fluorine-containing resin having functional group.

The unblocked isocyanate compound means usual isocyanate compounds other than blocked isocyanate compounds obtained by reaction of alcohol or oxime compound with an isocyanate compound.

Suitable as the unblocked isocyanate compound (B) are unblocked isocyanate compounds modified by a polyethylene oxide compound which are disclosed in JP11-310700A, JP7-330861A, JP61-291613A, etc.

Examples thereof are unblocked aromatic polyisocyanate compounds or unblocked aliphatic polyisocyanate compounds modified by a polyethylene oxide compound. Among them, unblocked aliphatic isocyanate compounds are preferred from the viewpoint of excellent weather resistance.

Among the aliphatic polyisocyanate compounds, examples of chain aliphatic polyisocyanate compounds are, for instance, diisocyanates such as trimethylene diisocyanate, tetramethylene diisocyanate, 1,6-diisocyanatohexane (=hexamethylene diisocyanate), pentamethylene diisocyanate, 1,2-propylene diisocyanate, 1,2-butylene diisocyanate, 2,3-butylene diisocyanate, 1,3-butylene diisocyanate, 2,4,4- or 2,2,4-trimethylhexamethylene diisocyanate and 2,6-diisocyanatomethyl caproate; and polyisocyanates such as lysine ester triisocyanate, 1,4,8-triisocyanatooctane, 1,6,11-triisocyanatoundecane, 1,8-diisocyanato-4-isocyanatomethyloctane, 1,3,6-triisocyanatohexane and 2,5,7-trimethyl-1,8-diisocyanato-5-isocyanatomethyloctane.

Among the aliphatic polyisocyanate compounds, examples of alicyclic polyisocyanate compounds are, for instance, diisocyanates such as 1,3-cyclopentene diisocyanate, 1,4-cyclohexane diisocyanate, 1,3-cyclohexane diisocyanate, 1-isocyanato-3,3,5-trimethyl-5-isocyanatomethyl-cyclohexane (=isophorone diisocyanate), 4,4'-methylenebis(cyclohexylisocyanate), methyl-2,4-cyclohexane diisocyanate, methyl-2,6-cyclohexane diisocyanate and 1,3- or 1,4-bis(isocyanatomethyl)cyclohexane; and polyisocyanates such as 1,3,5-triisocyanatocyclohexane, 1,3,5-trimethylisocyanatocyclohexane, 2-(3-isocyanatopropyl)-2,5-di(isocyanatomethyl)-bicyclo(2.2.1)heptane, 2-(3-isocyanatopropyl)-2,6-di(isocyanatomethyl)-bicyclo(2.2.1)heptane, 3-(3-isocyanatopropyl)-2,5-di(isocyanatomethyl)-bicyclo(2.2.1)heptane, 5-(2-isocyanatoethyl)-2-isocyanatomethyl-3-(3-isocyanatopropyl)-bicyclo(2.2.1)heptane, 6-(2-isocyanatoethyl)-2-isocyanatomethyl-3-(3-isocyanatopropyl)-bicyclo(2.2.1)heptane, 5-(2-isocyanatoethyl)-2-isocyanatomethyl-2-(3-isocyanatopropyl)-bicyclo(2.2.1)-heptane and 6-(2-isocyanatoethyl)-2-isocyanatomethyl-2-(3-isocyanatopropyl)-bicyclo(2.2.1)heptane.

Examples of the aromatic isocyanate compounds are, for instance, tolylene diisocyanate and the like.

Those isocyanate compounds may be used alone or in combination of two or more thereof.

Examples of the polyethylene oxide compound which is a modifying agent are compounds known as a nonionic emulsifying agent, for instance, polyoxyethylene alkyl ethers such as polyoxyethylene C8-C24 alkyl ethers such as polyoxyethylene monooctyl ether, polyoxyethylene monolauryl ether, polyoxyethylene monodecyl ether, polyoxyethylene monocetyl ether, polyoxyethylene monostearyl ether and polyoxyethylene monooleyl ether, preferably polyoxyethylene C10-C22 alkyl ethers, particularly preferably polyoxyethylene C12-C18 alkyl ethers; polyoxyethylene monoalkyl aryl ethers such as polyoxyethylene C8-C 12 alkyl - C6-C12 aryl ethers such as polyoxyethylene monooctyl phenyl ether, polyoxyethylene monononyl phenyl ether and polyoxyethylene monodecyl phenyl ether; polyoxyethylene sorbitan higher fatty acid esters such as polyoxyethylene sorbitan-mono, di or tri C10-C24 fatty acid esters such as polyoxyethylene sorbitan monolaurate, polyoxyethylene sorbitan monostearate, polyoxyethylene sorbitan monooleate, polyoxyethylene sorbitan distearate and polyoxyethylene sorbitan tristearate; and polyoxyethylene mono higher fatty acid esters such as polyoxyethylene mono C10-C24 fatty acid esters such as polyoxyethylene monolauric acid ester and polyoxyethylene monostearic acid ester. Those compounds can be used alone or in combination of two or more thereof. Preferred are polyoxyethylene C8-C24 alkyl ethers and polyoxyethylene C8-C 12 alkyl phenyl ethers from the viewpoint of easy dispersing in water.

The modification can be carried out, for example, by a method of mixing the isocyanate compound to a modifying agent in a solution and then heating for reaction or the like.

With respect to a ratio of the polyisocyanate compound to the modifying agent, an amount of active hydrogen atom in the modifying agent can be selected within a range of from 0.01 to 0.034 equivalent, preferably from about 0.015 equivalent to about 0.03 equivalent based on 1 equivalent of isocyanate group in the polyisocyanate compound.

Nonlimiting examples of the commercially available unblocked isocyanate compound modified with polyethylene oxide are, for instance, Bayhydur 3100, Bayhydur TPLS2150, etc. available from Sumitomo Bayer Urethane Kabushiki Kaisha; Duranate WB40-100 available from Asahi Kasei Kabushiki Kaisha; and the like.

The unblocked isocyanate compound (B) is usually used in the form of aqueous solution or water dispersion.

Further in order to accelerate the curing, a known curing accelerator may be used together. Examples of the curing accelerator are, for instance, dibutyltindilaurate and the like.

The aqueous fluorine-containing resin coating composition of the present invention can be prepared by mixing the emulsion (A) of fluorine-containing resin having functional group with the unblocked isocyanate compound (B).

A mixing ratio A/B (weight ratio) of the emulsion (A) of fluorine-containing resin having functional group (solid content) to the unblocked isocyanate compound (B) is 100/100 to 100/5, preferably 100/10 to 100/30.

As case demands, to the composition of the present invention may be added other resin emulsion and additives usually used for aqueous coating compositions.

Examples of the other resin emulsion are acrylic resin emulsion, polyurethane resin emulsion, polyester resin emulsion and the like.

In addition to the blending of other resin emulsion mentioned above, it is also preferable to make a composite of the fluoroolefin copolymer having functional group prepared by solution polymerization and other resin. The composite can be made, for example, by preparing an aqueous dispersion of fluoroolefin copolymer having functional group prepared by solution polymerization and then seed-polymerizing (emulsion polymerization) other non-fluoroolefin monomer (cf., for example, JP2002-179871A). Also the composite can be prepared by emulsion polymerization of a non-fluoroolefin monomer in the presence of the fluoroolefin copolymer having functional group prepared by solution polymerization as a polymeric emulsifying agent or a polymeric dispersing agent (cf., for example, JP7-238253A). The composite polymer prepared by emulsion polymerization is obtained in the form of emulsion.

The non-fluoroolefin monomer may contain or may not contain functional group. Examples thereof are, for instance, unsaturated carboxylic acids such as acrylic acid, methacrylic acid, maleic acid and crotonic acid; acrylic acid esters such as methyl acrylate and methacrylic acid esters such as methyl methacrylate; amide compounds such as acrylamide, methacrylamide, N-methyl acrylamide, N-methylol acrylamide, N-butoxymethyl acrylamide, N-methylol methacrylamide, N-methyl methacrylamide and N-butoxymethyl methacrylamide; hydroxyl-containing monomers such as hydroxyethyl acrylate, hydroxyethyl methacrylate, hydroxypropyl acrylate and hydroxypropyl methacrylate; monomers having epoxy group such as glycidyl acrylate and glycidyl methacrylate; monomers having silanol group such as γ-trimethoxysilane methacrylate and γ-triethoxysilane methacrylate; monomers having aldehyde group such as acrolein; vinyl compounds such as styrene and acrylonitrile; and the like.

Examples of additives for coating composition which may be blended to the aqueous coating composition of the present invention are, for instance, surfactant, pigment, dispersing agent, thickener, antiseptics, ultraviolet absorber, defoaming agent, leveling agent and the like.

As a surfactant, those explained supra in the stabilization of emulsion (A) can be used.

Examples of the thickener are Primal QR708 (available from Rohm & Haas Co., Ltd.) and the like. Examples of the defoaming agent are Byk 023 (Byk Chemie Japan, Ltd.) and the like. Examples of the dispersing agent are Byk 190 (Byk Chemie Japan, Ltd.), SN DISPERSANT 5027 (SAN NOPCO LIMITED) and the like.

The aqueous coating composition of the present invention is useful as various coating materials for weather resistant coating, electrodeposition coating, coil coating, coating for car, coating for prevention of scribblings and heavy duty coating. For coating, usual coating methods employed in the mentioned coating applications, for example, roll coating, dip coating, brush coating, spray coating, roller coating, electrodeposition coating and the like can be adopted.

The coating film formed using the composition of the present invention can be cured at room temperature by the effects that relatively many crosslinkable functional groups can be introduced to the fluoroolefin copolymer having functional group and particularly the unblocked isocyanate compound is used as an isocyanate compound which is a curing agent. For accelerating the curing, the coating film may be heated.

In the coating film obtained by the curing, the curing (crosslinking) has been advanced sufficiently, and as compared with aqueous fluorine-containing resin coating composition obtained by emulsion polymerization, strength, solvent resistance and stain-proofing property of the coating film are enhanced, appearance is smooth, and coating defects such as uneven loss of gloss and dull color are decreased.

Then the present invention is explained by means of examples and preparation examples, but is not limited to them.

A number average molecular weight and a number average particle size referred to herein are measured by the following methods.
(Number average molecular weight)
Measuring equipment: GPC (model HLC-8020) available from Toso Kabushiki Kaisha
Measuring conditions: Three TSKgel:GMHXL columns, one G2500HXL column and one GRCXL-L column are used. Tetrahydrofuran is used as an eluate, and polystyrene of which molecular weight is known is used as a standard sample for measurement of a molecular weight.
(Number average particle size)
Measuring equipment: MICROTRAC UPA Model 9340-UPA which is a product of Honeywell (available from Nikkiso Kabushiki Kaisha)
Measuring conditions: Measured in a state of being diluted with water

### SYNTHESIS EXAMPLE 1

Into a 6-liter stainless steel autoclave were poured 1.6 kg of acetone, 500 g of isopropyl alcohol and 680 g (6.8 mole) of tetrafluoroethylene, and the inside of the autoclave was replaced with nitrogen and heated to 67.5°C. Thereto was added 60 g of octanoyl peroxide solution (solid content 30 %) with stirring, and then a mixture of 178 g (2.5 mole) of ethyl vinyl ether, 287 g (2.5 mole) of hydroxybutyl vinyl ether and 250 g (1.2 mole) of 3-(2-allyloxyethoxycarbonyl)pronionic acid (a reaction product of ethylene glycol monoallyl ether and succinic anhydride) was added over two hours. Two hours after completion of the addition of monomers, 60 g of the same peroxide solution was further added. Then further 2-hour stirring was continued, and the mixture temperature was heated up to 80°C, followed by 3-hour stirring. The reaction mixture was cooled to room temperature and after the unreacted monomer was purged, the inside of the autoclave was further replaced with nitrogen to obtain 3.4 kg of product (solid content 36.9 % by weight). The obtained copolymer was one comprising 50 % by mole of tetrafluoroethylene, 20 % by mole of ethyl vinyl ether, 20 % by mole of hydroxybutyl vinyl ether and 10 % by mole of 3-(2-allyloxyethoxycarbonyl)pronionic acid. A number average molecular weight (Mn) of the copolymer was 5,000, a hydroxyl value thereof was 104 mgKOH/g, and an acid value thereof was 52 mgKOH/g. To this solution was added ammonia water to neutralize carboxyl. While the organic solvent was removed gradually under reduced pressure, 2.8 kg of water was slowly added to make an emulsion (solid content 30 % by weight). This emulsion is assumed to be F-1.

### EXAMPLE 1

Into a 100 ml polyethylene cup was poured 50 g of the emulsion F-1, and thereto were added 0.5 g of thickener (Primal QR708), 0.25 g of defoaming agent (Byk 023), 0.15 g of sulfate anionic surfactant (Newcol-707SF available from Nippon Nyukazai Kabushiki Kaisha) and 5.0 g of ion exchange water. The mixture was stirred at 1,000 rpm for 20 minutes with a homogenizing disperser and allowed to stand overnight. Then thereto were added 14.5 g of oxyethylene-modified unblocked isocyanate compound (Bayhydur 3100) and 3.5 g of methoxypropyl acetate, and 20 g of ion exchange water was added slowly with stirring at 2,000 rpm. The stirring was continued for about five minutes. This mixture was filtrated with a mesh and then coated with an applicator on an aluminum plate previously subjected to coating of solvent soluble crosslinkable fluorine-containing coating composition (white) and sanding treatment. Thus a coated plate was produced. This coated plate was allowed to stand at room temperature for five days for curing to make a test piece. The following characteristics of the test piece were evaluated. The results are shown in Table 1.
Appearance: Appearance of the coating film is evaluated with naked eyes.
A: The coating film is free from uneven loss of gloss and dull color.
B: There is uneven loss of gloss or color is somewhat dull.
C: There are uneven loss of gloss and much dull color.
Gloss: A specular gloss at an angle of 60 degrees is measured according to JIS K5400.
Pencil hardness: Pencil hardness is measured according to JIS K5400.
Solvent resistance test: The coating film surface is wiped with a nonwoven cloth impregnated with methyl ethyl ketone (MEK). Wiping back and forth is repeated 200 times. After the test, the coating film is evaluated with naked eyes by the following criteria.
A: There is recognized neither dissolution nor lowering of gloss.
B: There is recognized slightly dissolution or lowering of gloss.
C: There is recognized significant dissolution or lowering of gloss.
Stain-proof test: A 10 mm x 10 mm area of the coating film is painted with a felt pen of red ink (trade name: SAKURA PEN TOUCH available from SAKURA COLOR PRODUCTS CORPORATION) and is allowed to stand at 40°C for 24 hours. Then the painted surface is wiped using ethanol and remaining red ink is evaluated with naked eyes by the following criteria.
A: Red ink is completely removed.
B: Red ink slightly remains.
C: Red ink somewhat remains.
D: Red ink remarkably remains.

### COMPARATIVE EXAMPLE 1

A coating composition was prepared in the same manner as in Example 1 except that the aqueous emulsion of copolymer comprising chlorotrifluoroethylene/hydroxybutyl vinyl ether/ethyl vinyl ether/cyclohexyl vinyl ether/CH₂=CHOCH₂CH₂CH₂(CH₂CH₂O)ₙH prepared by emulsion polymerization method in accordance with Preparation Example 1 in JP7-324180A was used instead of F-1, and a test piece was produced and characteristics of the coating film were evaluated in the same manner as in Example 1. The results are shown in Table 1.

A number average molecular weight of CH₂=CHOCH₂CH₂CH₂(CH₂CH₂O)ₙH is about 500.

**TABLE 1**

| | Example 1 | Comparative Example 1 |
|---|---|---|
| Appearance | A | B |
| Gloss | 80 | 78 |
| Pencil hardness | F | 2B |
| Solvent resistance | A | C |
| Stain-proofing property | A | C |

### SYNTHESIS EXAMPLE 2

### (Preparation of fluorine-containing graft copolymer (A2))

Into a 500 ml four-necked separable flask was poured 142 g of acetone solution (solid content 65 % by weight) of copolymer (number average molecular weight measured by GPC: 10,500) comprising tetrafluoroethylene (TFE), vinyl versatate (VEOVA-10:VV-10 available from Shell Chemical), 4-hydroxybutyl vinyl ether (HBVE) and crotonic acid (mole ratio of 49.0/39.5/10.0/1.5), and then 1.80 g of 2-isocyanatoethyl methacrylate was added thereto with stirring, followed by stirring at 60°C for five hours. Then thereto were added 88.0 g of isopropanol, 26.7 g of n-butyl acrylate (BA), 6.96 g of acrylic acid (AA) and 0.337 g of dodecylmercaptan, followed by stirring sufficiently. To this solution was added 0.337 g of V-65 (2,2'-azobis(2,4-dimethylvaleronitrile) available from Wako Jyunyaku Kabushiki Kaisha) as an initiator, followed by stirring at 60°C for two hours. Then the temperature was raised to 80°C and one-hour stirring was carried out to obtain a fluorine-containing graft copolymer in a concentration of 46.5 % by weight (solid content). A number average molecular weight (Mn), hydroxyl value and acid value of this copolymer were 10,500, 40 mgKOH/g and 6 mgKOH/g, respectively.

### SYNTHESIS EXAMPLES 3 and 4

Fluorine-containing graft copolymers were prepared in the same manner as in Synthesis Example 1 except that monomers shown in Table 2 were used.

Abbreviations in Table 2 represent the followings.
TFE: Tetrafluoroethylene
HFP: Hexafluoropropylene
VAc: Vinyl acetate
VV-10: VEOVA-10 vinyl versatate available from Shell Chemical
HBVE: 4-Hydroxybutyl vinyl ether
BA: Butyl acrylate
AA: Acrylic acid

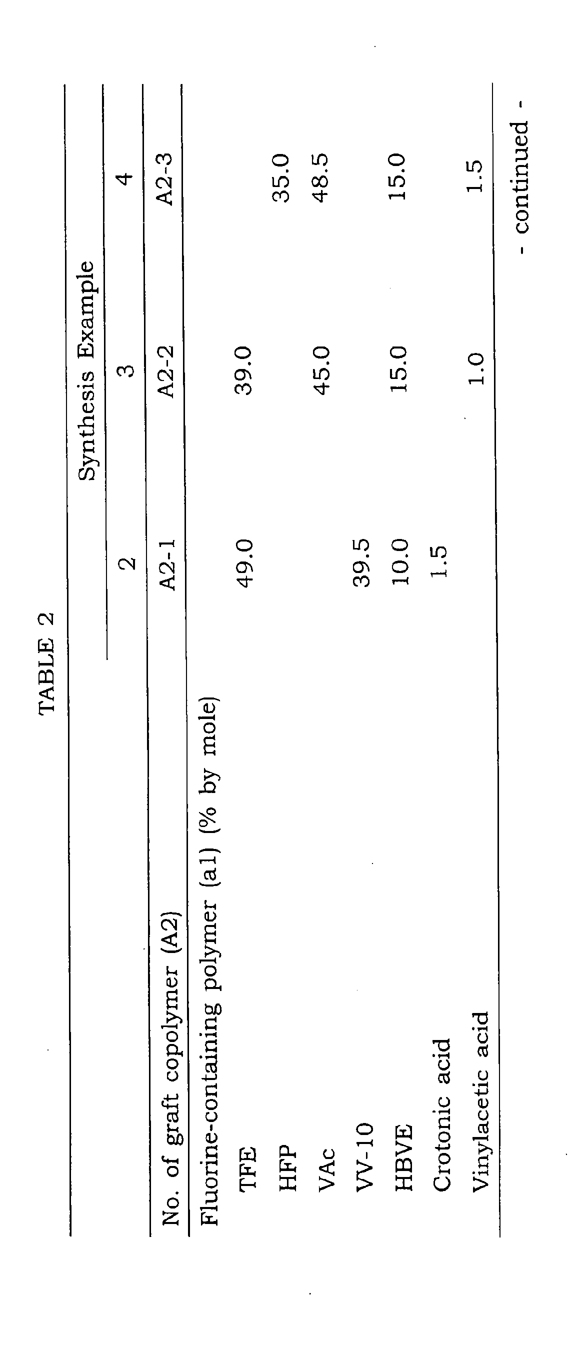

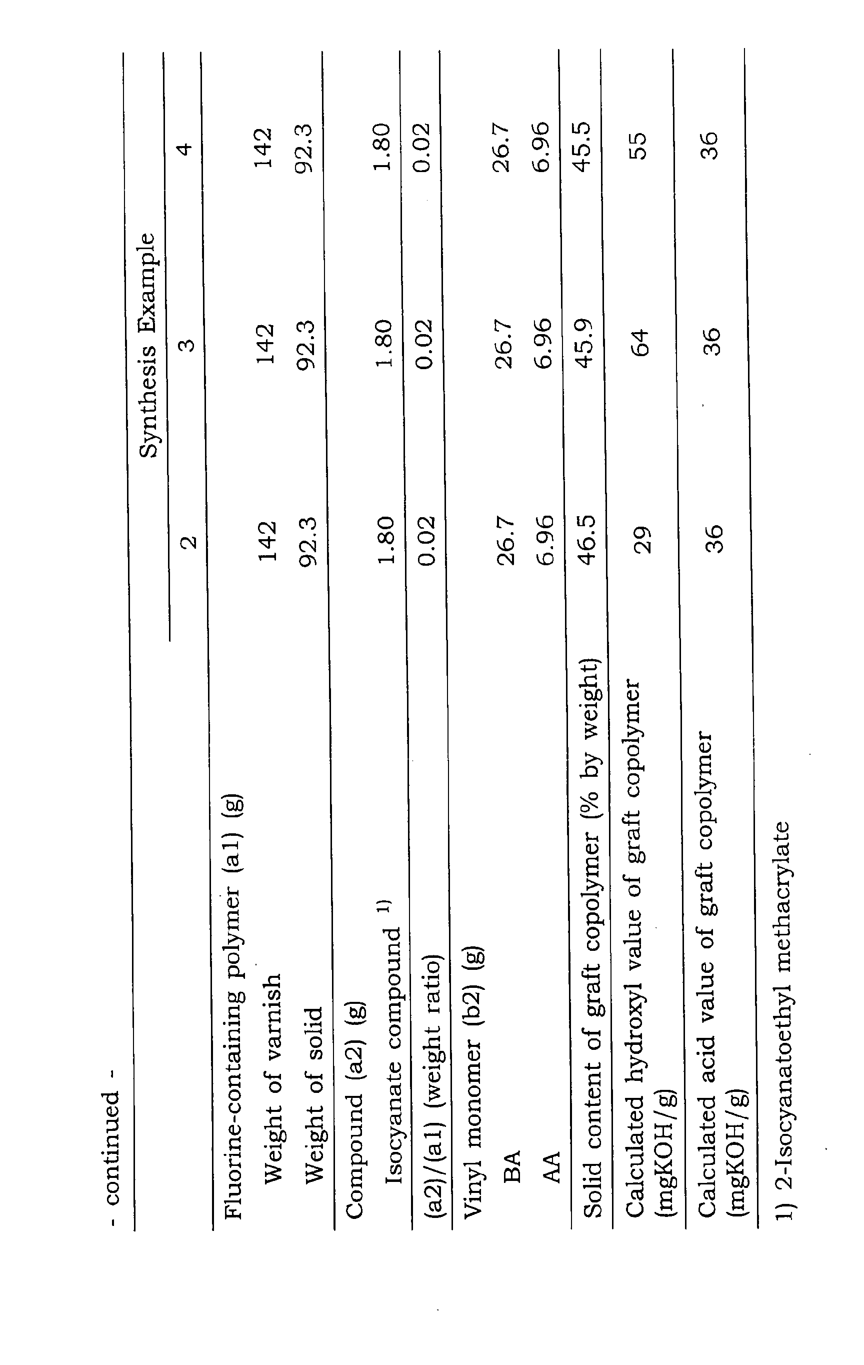

### PREPARATION EXAMPLE 1

### (Preparation of aqueous dispersion)

Into a 300 ml flask was poured 50.0 g of fluorine-containing graft copolymer (A2-1) obtained in Synthesis Example 2. Then when 2.13 g of triethylamine was added with stirring and further 30.0 g of water was added slowly with stirring, the whole mixture showed white turbidity. While heating this solution to 60°C, acetone and isopropanol were distilled off under reduced pressure to obtain an aqueous dispersion of fluorine-containing resin. A solid content of this aqueous dispersion was 45.4 % by weight, and a number average particle size of particles of the fluorine-containing graft copolymer (A2-1) was 55 nm.

### PREPARATION EXAMPLES 2 and 3

Fluorine-containing graft copolymers shown in Table 3 were prepared in the same manner as in Preparation Example 1 except that fluorine-containing graft copolymers and triethylamine were used in amounts shown in Table 3.

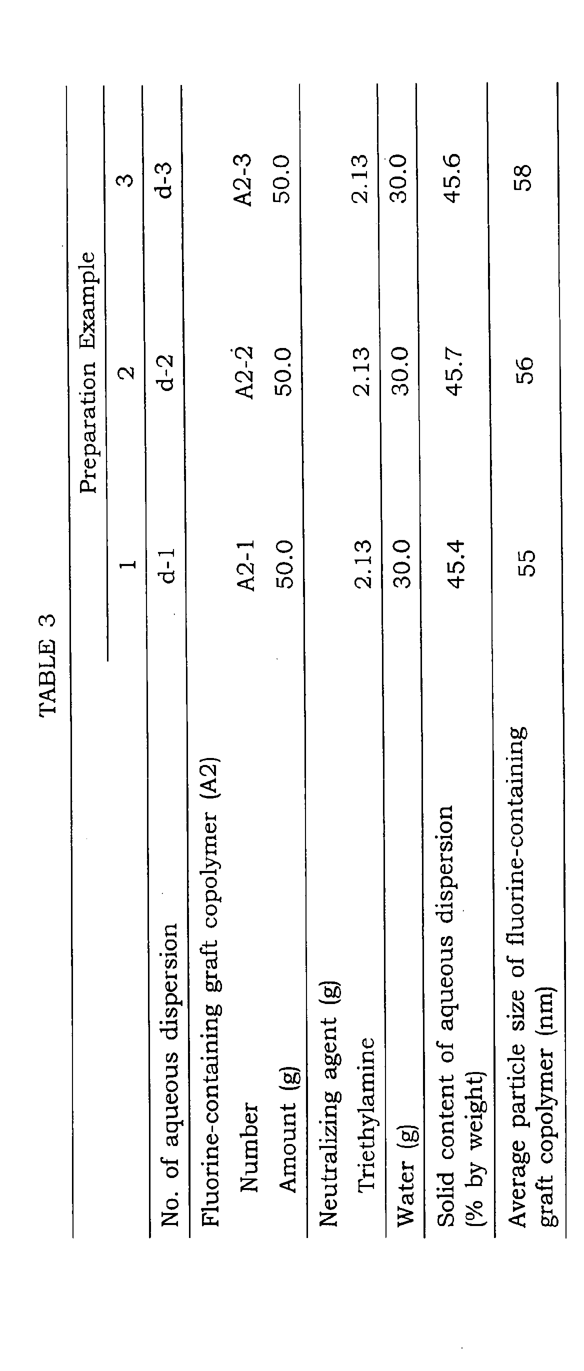

### EXAMPLE 2

### (Preparation of fluorine-containing coating composition)

Into a 100 ml polyethylene cup was poured 50 g of the aqueous dispersion (d-1) of fluorine-containing resin, and thereto were added 0.5 g of thickener (Primal QR708), 0.25 g of defoaming agent (Byk 023), 0.076 g of sulfate anionic surfactant (Newcol-707SF available from Nippon Nyukazai Kabushiki Kaisha, solid content: 30 % by weight) and 5.0 g of ion exchange water. The mixture was stirred at 1,000 rpm for 20 minutes with a homogenizing disperser and allowed to stand overnight. Then thereto were added 6.81 g of oxyethylene-modified unblocked isocyanate compound (Bayhydur 3100 available from Sumitomo Bayer Urethane Kabushiki Kaisha) and 3.5 g of methoxypropyl acetate, and 20 g of ion exchange water was added slowly with stirring at 2,000 rpm, followed by stirring over about five minutes. This mixture was filtrated with a mesh to obtain a curable fluorine-containing resin composition.

This curable fluorine-containing resin composition was coated with an applicator on an aluminum plate previously subjected to coating of solvent soluble crosslinkable fluorine-containing coating composition (white) and sanding treatment. Thus a coated plate was produced. This coated plate was dried at 40°C for three hours and further allowed to stand at room temperature for five days for curing to make a test piece. The following characteristics of the test piece were determined. The results are shown in Table 4.

With respect to appearance, gloss, pencil hardness and solvent resistance test, the same measuring methods and evaluation methods as in Example 1 are employed. Water resistance and resistance to linear contamination caused by rainfall are measured and evaluated by the following methods.
Water resistance: A coating film is immersed in 60°C hot water for 24 hours and then evaluated with naked eyes.

The result of evaluation is assumed to be A when the coating film is in good order, is assumed to be B when there are slightly recognized white turbidity and loss of gloss, is assumed to be C when there are remarkably recognized white turbidity and loss of gloss, and is assumed to be D when dissolution of the coating film arises.
Resistance to linear contamination caused by rainfall: The coating film is subjected to outdoor exposure at an angle of 45° to level plane, and a difference between the initial lightness and the lightness one month after and six months after is measured.

The result of evaluation is assumed to be A when the difference (ΔE) in lightness is 0 or less than 2, is assumed to be B when the difference (ΔE) in lightness is not less than 2 and less than 4, is assumed to be C when the difference (ΔE) in lightness is not less than 4 and less than 6, is assumed to be D when the difference (ΔE) in lightness is not less than 6 and less than 10, and is assumed to be E when the difference (ΔE) in lightness is not less than 10.

### EXAMPLES 3 and 4

Curable fluorine-containing resin compositions were prepared in the same manner as in Example 2 except that amounts shown in Table 4 were employed (aqueous dispersion of fluorine-containing resin: 50.0 g). Characteristics of coating films were evaluated in the same manner as in Example 2. The results are shown in Table 4.

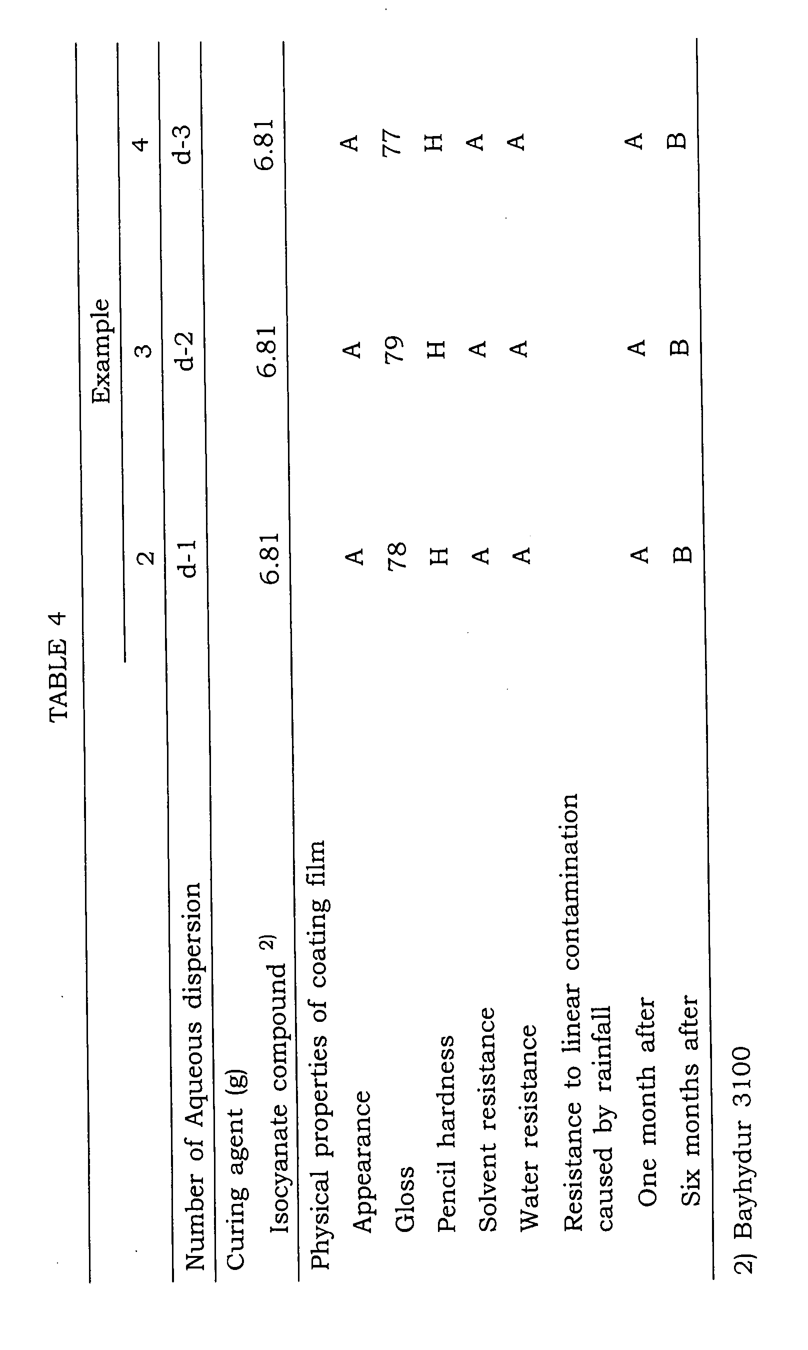

### INDUSTRIAL APPLICABILITY

The aqueous fluorine-containing resin coating composition of the present invention is capable of curing at room temperature and can provide a coating film being excellent in chemical resistance, water resistance, solvent resistance, stain-proof property, hardness, weather resistance and durability.

## Claims

1. A fluorine-containing aqueous coating composition comprising: (A) an aqueous emulsion of fluorine-containing resin having functional group which is obtained by dispersing, in water, a fluoroolefin copolymer having functional group prepared by solution polymerization method and (B) a water-dispersible unblocked isocyanate compound.

2. The composition of Claim 1, wherein the fluoroolefin copolymer (A) having functional group has a hydroxyl value of from 10 to 300 mgKOH/g and an acid value of from 5 to 200 mgKOH/g.

3. The composition of Claim 1, wherein the emulsion (A) of fluorine-containing resin having functional group is obtained by dispersing, in water, a fluorine-containing graft copolymer having functional group prepared by graft-polymerizing a vinyl monomer with a fluorine-containing polymer having polymerizable unsaturated double bond, said fluorine-containing polymer having polymerizable unsaturated double bond being a reaction product of a fluorine-containing polymer having carboxyl or hydroxyl with a compound having polymerizable unsaturated double bond and functional group capable of reacting with the carboxyl or hydroxyl.

4. The composition of any of Claims 1 to 3, wherein said fluorine-containing resin having functional group has hydroxyl and water-soluble or water-dispersible functional group.

5. The composition of Claim 4, wherein said water-soluble or water-dispersible functional group is a functional group obtained by neutralizing an anionic functional group with alkali.

6. The composition of Claim 4 or 5, wherein said water-soluble or water-dispersible functional group is a water-soluble or water-dispersible salt of anionic functional group.

7. The composition of Claim 5 or 6, wherein said anionic functional group is carboxyl and/or sulfonic acid group.

8. The composition of Claim 6 or 7, wherein said water-soluble or water-dispersible salt is an ammonium salt, amine salt or alkali metal salt.

9. The composition of any of Claims 1 to 8, wherein said fluorine-containing resin having functional group contains tetrafluoroethylene and/or hexafluoropropylene as structural units.

10. The composition of any of Claims 1 to 9, wherein said water-dispersible unblocked isocyanate compound (B) is a polyethylene oxide-modified unblocked isocyanate compound.
